(19) Europäisches Patentamt European Patent Office Office européen des brevets

(11) **EP 3 894 202 B1**

(12) **FASCICULE DE BREVET EUROPEEN**

(45) Date de publication et mention de la délivrance du brevet:
**06.09.2023 Bulletin 2023/36**

(21) Numéro de dépôt: **19845699.8**

(22) Date de dépôt: **13.12.2019**

(51) Classification Internationale des Brevets (IPC):
**B29D 30/46** *(2006.01)*    **B29D 30/30** *(2006.01)*
**B26D 3/00** *(2006.01)*    **B26D 1/60** *(2006.01)*
**B26D 5/22** *(2006.01)*    **B26D 5/32** *(2006.01)*
**B26D 5/34** *(2006.01)*

(52) Classification Coopérative des Brevets (CPC):
**B29D 30/46; B26D 1/605; B26D 3/003; B26D 5/22; B26D 5/32; B26D 5/34; B29D 30/3007**

(86) Numéro de dépôt international:
**PCT/FR2019/053055**

(87) Numéro de publication internationale:
**WO 2020/120918 (18.06.2020 Gazette 2020/25)**

(54) **DISPOSITIF ET PROCÉDÉ DE POSE DE NAPPE DE RENFORT SUR UN TAMBOUR DE FABRICATION DE BANDAGE PNEUMATIQUE AVEC COUPE A LA VOLEE**

VORRICHTUNG UND VERFAHREN ZUR POSITIONIERUNG EINER KARKASSENLAGE AUF EINE REIFENAUFBAUTROMMEL MIT SYNCHRONEM SCHNEIDEN

DEVICE AND METHOD FOR POSING A TIRE PLY ON A DRUM WITH SYNCHRONIZED CUTTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2018 FR 1872911**
          **31.01.2019 FR 1900961**

(43) Date de publication de la demande:
**20.10.2021 Bulletin 2021/42**

(73) Titulaire: **COMPAGNIE GENERALE DES ETABLISSEMENTS MICHELIN**
**63000 Clermont-Ferrand (FR)**

(72) Inventeurs:
• **CAREO, Olivier**
**63040 Clermont-Ferrand Cedex 9 (FR)**

• **PAISSEREAU, Jean-Pierre**
**63040 Clermont-Ferrand Cedex 9 (FR)**
• **VALLEJO CRIADO, Manuel**
**63040 Clermont-Ferrand Cedex 9 (FR)**

(74) Mandataire: **Redouté, Gilles Pierre**
**M. F. P. Michelin**
**Service juridique - Propriété Intellectuelle**
**DCJ/PI - F35 - Site de Ladoux**
**23, place des Carmes-Déchaux**
**63040 Clermont-Ferrand Cedex 9 (FR)**

(56) Documents cités:
**EP-A1- 0 561 609**    **WO-A1-2018/118008**
**DE-A1- 2 743 502**    **DE-B- 1 144 912**
**JP-A- 2018 024 027**    **US-A- 3 319 500**

**Description**

La présente invention concerne le domaine général de la fabrication des bandages, notamment des bandages pneumatiques.

Il est connu de renforcer les bandages pneumatiques au moyen de nappes de renfort contenant des fils de renforts qui sont noyés dans une couche de gomme et disposés parallèlement les uns aux autres selon un angle prédéterminé, dit « angle de nappe », par rapport à la direction longitudinale de la nappe de renfort.

La pose de telles nappes, que l'on peut notamment superposer de manière à croiser les fils de renfort d'une couche à l'autre, s'effectue généralement sur un tambour, sur lequel on enroule la nappe de renfort concernée et l'on referme ladite nappe de renfort sur elle-même en opérant une jonction des extrémités avant et arrière de ladite nappe de renfort.

Afin de couvrir exactement la circonférence du tambour, et de permettre un aboutage des extrémités de la nappe de renfort sans jeu ni chevauchement, ladite nappe de renfort doit être coupée et posée de façon très précise (voir par exemple les demandes de brevet WO 2018/118008 A1, EP 0 561 609 A1 et JP 2018024027 A).

De surcroît, lorsque l'opération de coupe est réalisée manuellement, elle mobilise durablement l'opérateur, qui doit rester présent devant le poste pendant tout le cycle de pose.

Par ailleurs, le tracé de coupe doit impérativement suivre l'espace interstitiel compris entre deux fils de renfort successifs, sans couper lesdits fils.

Ainsi, lorsque l'angle de nappe est faible, la longueur du tracé de coupe est importante, ce qui oblige l'opérateur à adopter une posture non ergonomique pour parcourir avec son outil coupant l'intégralité dudit tracé de coupe.

Les objets assignés à l'invention visent par conséquent à remédier aux inconvénients susmentionnés et à proposer un dispositif de fabrication de bandage qui permette de réduire le temps de cycle et la charge de travail manuel nécessaire à la pose d'une nappe de renfort, tout en garantissant un ajustement précis de la longueur de ladite nappe de renfort.

Les objets assignés à l'invention sont atteints au moyen d'un dispositif de fabrication de bandage, notamment de bandage pneumatique, ledit dispositif comprenant :

- un système d'alimentation agencé pour alimenter ledit dispositif de fabrication avec une bande dite « bande continue » acheminée selon une direction longitudinale,

- un outil de coupe qui est monté mobile selon une direction de coupe transverse à la direction longitudinale, de sorte à pouvoir opérer un mouvement dit « mouvement de coupe » qui permet de sectionner ladite bande continue dans sa largeur et ainsi de détacher de la bande continue une nappe de renfort qui s'étend, selon la direction longitudinale, depuis un front avant jusqu'à un front arrière,

- un tambour, qui est agencé pour pouvoir être entraîné en rotation selon un sens dit « sens d'enroulement » qui permet d'enrouler la nappe de renfort sur la circonférence dudit tambour, selon un mouvement dit « mouvement d'enroulement »,

ledit dispositif de fabrication étant caractérisé en ce qu'il comprend une unité de synchronisation agencée pour synchroniser automatiquement le mouvement de coupe avec le mouvement d'enroulement, de manière à entraîner l'outil de coupe en déplacement sur toute la largeur de la bande continue afin de détacher la nappe de renfort de la bande continue en générant le front arrière de ladite nappe de renfort, tandis que le front avant de ladite nappe de renfort est en prise sur le tambour et que la bande continue est entraînée avec ladite nappe de renfort à une vitesse non nulle dans le sens d'enroulement pour accompagner le mouvement d'enroulement en cours de ladite nappe de renfort sur le tambour.

Avantageusement, le dispositif selon l'invention permet d'automatiser au moins en partie les opérations de pose de la nappe de renfort en réalisant automatiquement une coupe à la volée permettant de détacher complètement ladite nappe de renfort de la bande continue, alors même que ladite nappe de renfort exécute son mouvement d'enroulement sur le tambour, et ce sans qu'il soit nécessaire d'interrompre ou même d'inverser le sens de rotation du tambour, et plus particulièrement sans qu'il soit nécessaire d'arrêter le défilement de la bande continue pendant l'opération de coupe. Le cas échéant, on interrompra le défilement de la bande continue uniquement avant l'opération de coupe, juste le temps nécessaire à l'outil de coupe pour engager la bande continue. L'engagement de l'outil de coupe pourra se faire par exemple en transperçant, au point de départ du tracé de coupe, l'épaisseur de la bande continue à l'aide d'une portion dudit outil de coupe formant une lame pointue.

En réalisant simultanément la coupe à longueur et l'enroulement de la nappe de renfort, on peut avantageusement réduire le temps de cycle correspondant, et libérer l'opérateur pour d'autres tâches.

En outre, l'opération de coupe peut ainsi être réalisée au moyen d'une structure peu encombrante, simple à piloter par l'unité de synchronisation, ce qui permet d'obtenir un poste de travail relativement compact.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

Les figures 1A et 1B illustrent, selon des vues schématiques respectivement de dessus et de côté, l'engagement de la pointe d'une bande continue sur un tambour et le début de l'opération d'enroulement au sein d'un dispositif conforme à l'invention.

Les figures 2A et 2B illustrent, selon des vues schématiques respectivement de dessus et de côté, le début de l'opération de coupe, au moment où l'outil de coupe pénètre dans la bande continue qui est en cours d'enroulement sur le tambour.

Les figures 3A et 3B illustrent, selon des vues schématiques respectivement de dessus et de côté, la poursuite conjointe des opérations synchronisées de coupe et d'enroulement.

Les figures 4A et 4B illustrent, selon des vues schématiques respectivement de dessus et de côté, l'achèvement de l'opération de coupe, lorsque l'outil de coupe s'extrait de la bande continue par la lisière opposée à la lisière par laquelle il a pénétré dans ladite bande continue.

Les figures 5A et 5B illustrent, selon des vues schématiques respectivement de dessus et de côté, la fin de l'opération d'enroulement de la nappe de renfort qui vient d'être détachée de la bande continue par l'opération de coupe, et l'aboutage des fronts avant et arrière de ladite nappe de renfort pour refermer cette dernière sur elle-même autour du tambour.

La figure 6 représente, selon une vue de détail en perspective, un exemple de lame d'outil de coupe engageant la lisière de la bande continue conformément à l'étape illustrée sur les figures 2A et 2B.

La présente invention concerne un dispositif 1 de fabrication de bandage, et plus particulièrement de bandage pneumatique.

La présente invention est notamment adaptée à la fabrication de bandages pneumatiques qui sont destinés à des véhicules poids-lourds, typiquement dont le Poids Total Autorisé en Charge (« PTAC ») est supérieur à 3,5 tonnes, ou destinés à des engins de génie civil, et qui présentent donc des grandes dimensions et des masses élevées.

Elle est toutefois parfaitement adaptable à la fabrication de bandages pneumatiques pour véhicules de tourisme, deux-roues, etc.

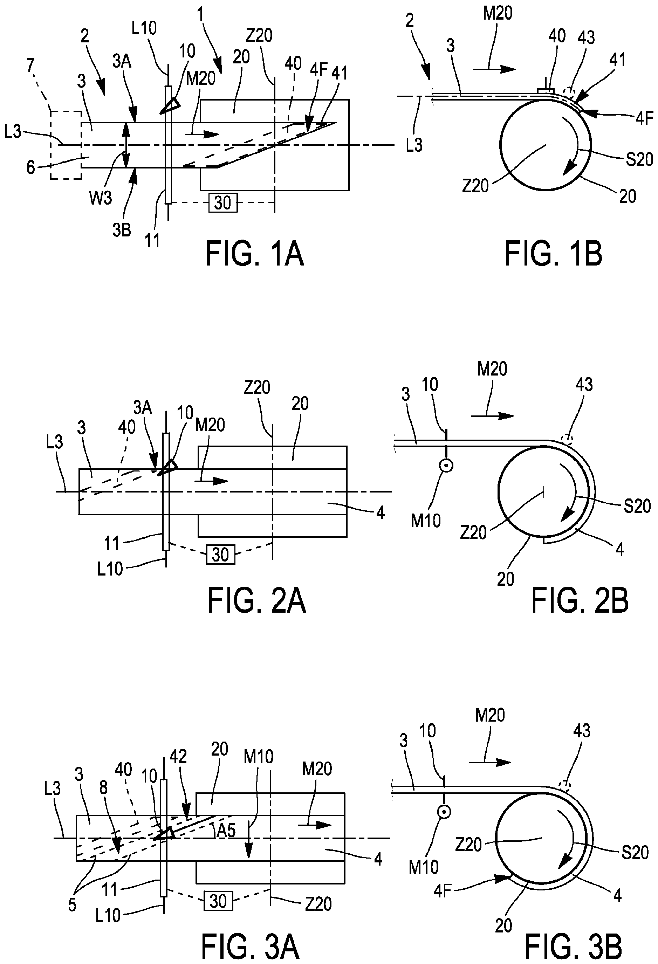

Le dispositif 1 de fabrication, ci-après « dispositif » 1, comprend tout d'abord un système d'alimentation 2, qui est agencé pour alimenter ledit dispositif de fabrication avec une bande dite « bande continue » 3, acheminée selon une direction longitudinale L3, tel que cela est notamment visible sur la figure 1A.

Ladite bande 3 est dite « continue » en ceci qu'elle se présente d'un seul tenant, selon la direction longitudinale L3, sur une longueur relativement importante, qui est bien supérieure à la longueur unitaire des nappes de renfort 4 que l'on souhaite prélever dans ladite bande continue 3 en découpant ladite bande continue 3 en tronçons successifs.

Plus particulièrement, on pourra ainsi approvisionner en continu une longueur de bande continue 3 supérieure à plusieurs fois la longueur unitaire de la nappe de renfort 4 souhaitée, par exemple égale ou supérieure à 10 fois, égale ou supérieure à 50 fois, par exemple sensiblement égale à 100 fois la longueur unitaire de la nappe de renfort 4.

Le système d'alimentation 2 pourra par exemple comprendre un poste de déroulage apte à accueillir une bobine d'entrée 7 qui contient initialement la bande continue 3, que l'on déroulera au fur et à mesure des besoins en nappe de renfort 4.

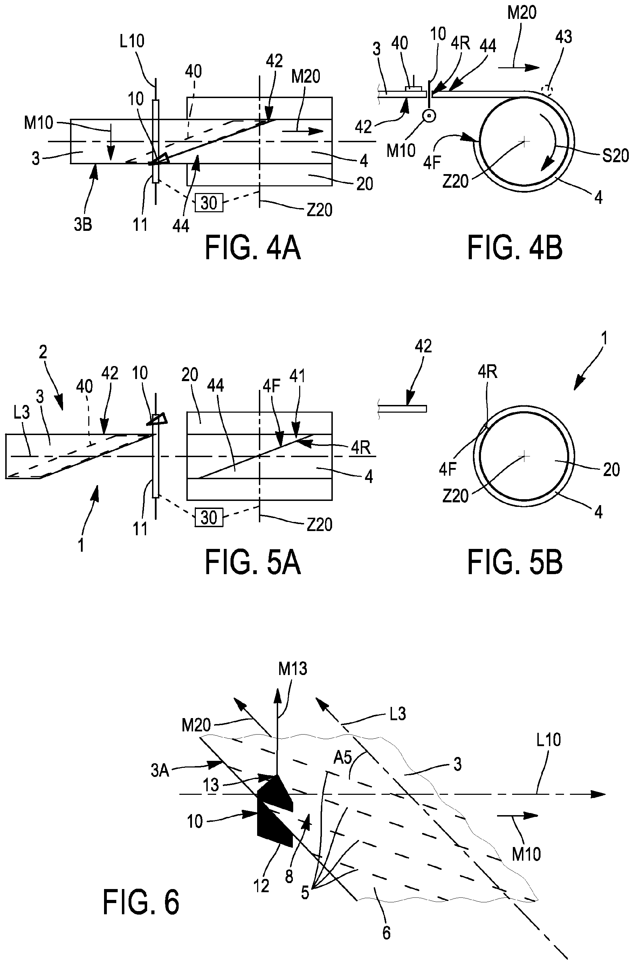

Tel que cela est notamment visible sur la figure 6, la bande continue 3 est de préférence constituée d'une pluralité de fils de renfort 5, de préférence métalliques, qui sont disposés parallèlement les uns aux autres et orientés selon un angle A5 prédéterminé non nul, dit « angle de nappe » A5, par rapport à la direction longitudinale L3, et qui sont noyés dans une couche de gomme 6, de préférence à base de caoutchouc non vulcanisé.

De préférence, l'angle de nappe A5 sera strictement compris entre 10 degrés et 80 degrés, et plus préférentiellement entre 15 degrés et 70 degrés, par exemple entre 16 degrés et 65 degrés.

Lesdits fils de renfort 5 pourront être multibrins, c'est-à-dire constitués chacun de plusieurs filaments assemblés par tressage, ou bien de préférence monobrin, c'est-à-dire constitués chacun d'un seul filament d'un seul tenant, préférentiellement métallique.

Le dispositif 1 comprend également un outil de coupe 10 qui est monté mobile selon une direction de coupe L10 transverse à la direction longitudinale L3, de sorte à pouvoir opérer un mouvement dit « mouvement de coupe » M10 qui permet de sectionner la bande continue 3 dans la largeur W3 de ladite bande continue, et qui permet ainsi de détacher de la bande continue 3 une nappe de renfort 4 qui s'étend, selon la direction longitudinale L3, depuis un front avant 4F jusqu'à un front arrière 4R.

L'outil de coupe 10 pourra être de préférence formé par une lame 12, dont le tranchant permet de sectionner la bande continue 3, et plus particulièrement la couche de gomme 6, tel que cela est notamment illustré sur la figure 6.

Tel que cela est visible sur la figure 6, ladite lame 12 pourra présenter une pointe de perforation 13 qui permet à l'outil de coupe 10 d'engager la bande continue 3 en venant perforer ladite bande continue, dans le sens de l'épaisseur de ladite bande, au point de départ du tracé de coupe.

En variante, l'outil de coupe 10 pourrait être formé par exemple par un faisceau laser, un jet d'eau pressurisé qui pourra être chargé ou non de particules abrasives, ou tout autre moyen de coupe approprié.

Ledit outil de coupe 10 pourra être guidé en translation selon la direction de coupe L10, par exemple au moyen d'un rail de guidage 11.

Le dispositif 1 comprend également un tambour 20, qui est agencé pour pouvoir être entraîné en rotation selon un sens dit « sens d'enroulement » S20 qui permet d'enrouler la nappe de renfort 4, et donc plus globalement la portion correspondante de la bande continue 3, sur la circonférence dudit tambour 20, selon un mouvement dit « mouvement d'enroulement » M20.

Le tambour 20 présente avantageusement une forme de révolution autour de son axe central Z20 de rotation. Ledit tambour 20 pourra par exemple former un cylindre droit de base circulaire ou, éventuellement, en variante, un noyau torique, dont la forme correspond sensiblement à celle du bandage à obtenir.

On notera que la direction longitudinale L3 de la portion de la bande continue 3 engagée sur le tambour 20 est de préférence orientée perpendiculairement à l'axe central Z20 du tambour 20, et plus particulièrement est de préférence contenue dans un plan qui est normal à l'axe central Z20 du tambour, et encore plus préférentiellement coïncide avec la circonférence équatoriale dudit tambour 20. On peut ainsi enrouler facilement et précisément la nappe de renfort 4 sur elle-même.

Selon l'invention, le dispositif 1 comprend une unité de synchronisation 30 qui est agencée pour synchroniser automatiquement le mouvement de coupe M10 avec le mouvement d'enroulement M20, de manière à entraîner l'outil de coupe 10 en déplacement sur toute la largeur W3 de la bande continue 3 afin de détacher la nappe de renfort 4 de la bande continue 3 en générant le front arrière 4R de ladite nappe de renfort 4, tandis que le front 4F avant de ladite nappe de renfort est en prise sur le tambour 20 et que la bande continue 3 est entraînée, avec ladite nappe de renfort 4, à une vitesse non nulle dans le sens d'enroulement S20 pour accompagner le mouvement d'enroulement M20 en cours de ladite nappe de renfort 4 sur le tambour 20.

Par commodité de description, on pourra assimiler sur les figures les mouvements de coupe M10, respectivement d'enroulement M20, et les vitesses selon lesquelles sont exécutés ces mouvements M10, M20.

Avantageusement, le dispositif 1 permet donc de réaliser à la volée une coupe de la bande continue 3, qui a pour effet de détacher complètement la nappe de renfort 4 de ladite bande continue 3, alors même que ladite bande continue 3 poursuit son mouvement d'enroulement M20, et que la nappe de renfort 4 est en prise avec le tambour 20.

Avantageusement, l'invention évite notamment d'avoir à stopper l'avance de la bande continue 3, et donc l'opération d'enroulement sur le tambour 20, pendant l'opération de coupe. En particulier, dès lors que l'outil de coupe 10 a débuté son engagement avec la bande continue 3, on peut réaliser entièrement la coupe et détacher ainsi la nappe de renfort 4 sans qu'il soit nécessaire de stopper le mouvement d'enroulement M20, ni de stopper le mouvement de coupe M10, ni à plus forte raison d'inverser le sens S20 du mouvement d'enroulement (pour faire repartir la bande continue 3 en arrière) ou le sens du mouvement de coupe M10 (pour faire rebrousser chemin à l'outil de coupe 10).

On évite ainsi avantageusement d'avoir à interrompre puis reprendre l'action de coupe sur un même tracé de coupe, destiné à générer un seul et même front arrière 4R. Cette continuité de mouvement permet non seulement de réduire le temps nécessaire à l'opération de coupe, mais également de limiter les phénomènes inertiels qui seraient susceptibles d'affecter les organes en mouvement, notamment le tambour 20 et l'outil de coupe 10. On obtient de la sorte une coupe précise et nette, sans à-coups.

On notera que, de façon connue en soi, la nappe de renfort 4, et plus globalement la bande continue 3, pourra venir en prise sur la surface circonférentielle du tambour 20 par simple adhérence, du fait de l'aptitude naturelle (dite « collant ») de la gomme 6 à adhérer sur ladite surface du tambour 20.

On notera également que, de préférence, le mouvement d'enroulement M20 correspond ici, notamment lorsque la bande continue 3 se présente au niveau de l'outil de coupe 10, à un déplacement en translation de la bande continue 3 selon la direction longitudinale L3.

On notera en outre que, tant que l'outil de coupe 10 n'a pas achevé son opération de coupe, c'est-à-dire tant que la nappe de renfort 4 n'est pas intégralement détachée du reste de la bande continue 3 dont ladite nappe de renfort 4 est issue, la bande continue 3 est entraînée solidairement avec la nappe de renfort 4, selon un même mouvement d'enroulement M20, à la même vitesse (non nulle) que ladite nappe de renfort 4.

Avantageusement, l'invention permet d'exécuter, simultanément au mouvement d'enroulement M20, un mouvement de coupe M10 selon une direction de coupe L10 qui est sécante à la direction longitudinale L3 selon laquelle la bande continue 3 défile devant l'emplacement de l'outil de coupe 10, si bien que le tracé résultant que réalise l'outil de coupe 10 sur la bande continue 3, et qui correspond donc au tracé du front arrière 4R de la nappe de renfort 4 en cours de séparation de la bande continue 3, correspond, vectoriellement, à la combinaison de ces deux composantes de mouvement M10, M20, à savoir la composante de mouvement d'enroulement M20 et la composante de mouvement de coupe M10.

Afin de trancher la bande continue dans sa largeur W3, le mouvement de coupe M10 est exécuté depuis la lisière d'attaque, ici la lisière gauche 3A sur les figures, de la bande continue 3, au niveau de laquelle l'outil de coupe 10 engage ladite bande continue 3, tel que cela est illustré sur la figure 2A, jusqu'à la lisière de fuite, ici la lisière droite 3B sur les figures, de ladite bande continue 3, par laquelle ledit outil de coupe 10 s'extrait de ladite bande continue 3 une fois le front arrière 4R créé, tel que cela est illustré sur la figure 4A.

L'outil de coupe 10 pourra par exemple engager la bande continue 3 par abord latéral, de manière à pénétrer transversalement ladite bande continue 3, depuis l'extérieur de ladite bande continue 3, par l'un des bords latéraux de ladite bande continue, formant la lisière d'attaque 3A, selon un mouvement d'engagement transverse qui est orienté dans le sens de la largeur W3 de la bande continue 3, et plus préférentiellement qui coïncide avec la direction de coupe L10 du mouvement de coupe M10.

Avantageusement, l'exécution d'un tel mouvement d'engagement transverse pourra s'effectuer sans interrompre le mouvement d'enroulement M20.

Le mouvement de coupe M10 pourra alors en outre avantageusement correspondre à la simple poursuite dudit mouvement d'engagement.

Selon une autre possibilité de mise en oeuvre, l'outil de coupe 10 pourra engager la bande continue 3 en perforant initialement ladite bande continue 3 au niveau de la lisière d'attaque 3A selon un mouvement d'engagement dit « plongeant » M13 qui est orienté dans le sens de l'épaisseur de la bande continue 3, de préférence selon une direction normale à la surface de la bande continue 3, tel que cela est illustré sur la figure 6.

A cet effet, l'outil de coupe 10 comprendra une pointe de perforation 13 que l'on vient initialement enfoncer dans la bande continue 3, à proximité de la lisière d'attaque 3A. Ladite pointe de perforation 13 va en s'élargissant et présente une base suffisamment large, au regard de l'amplitude du mouvement d'engagement plongeant M13 et de la proximité du point de pénétration par rapport à la lisière d'attaque 3A, pour sectionner ladite lisière d'attaque 3A au cours de l'exécution dudit mouvement d'engagement plongeant M13. De la sorte, il suffira ensuite de réaliser le mouvement de coupe M10 transverse jusqu'à la lisière de fuite 3B pour détacher complètement la nappe de renfort 4 de la bande continue.

On notera que, pour simplifier la structure de l'outil de coupe 10 et garantir la précision de l'opération de coupe, on préférera stopper momentanément le mouvement d'enroulement M20 le temps nécessaire à l'exécution du mouvement d'engagement plongeant M13. On reprendra ensuite ledit mouvement d'enroulement M20 lorsque débutera, après perforation de la bande continue 3, le mouvement de coupe M10 qui est synchronisé audit mouvement d'enroulement M20, et qui est orienté dans une direction sécante à la direction du mouvement d'engagement plongeant M13.

Quelle que soit la manière dont l'outil de coupe 10 engage la bande continue 3 au niveau de la lisière d'attaque 3A, le mouvement de coupe M10 est de préférence continu, c'est-à-dire sans interruption, et monotone, c'est-à-dire sans inversion du sens dudit mouvement de coupe M10, de la lisière d'attaque 3A jusqu'à la lisière de fuite 3B.

Il en va avantageusement de même pour le mouvement d'enroulement M20, qui, pendant le mouvement de coupe M10, se poursuit de façon continue et monotone, sans interruption, c'est-à-dire sans que l'on arrête la rotation du tambour 20, ni inversion, c'est-à-dire sans que l'on modifie le sens de rotation S20 du tambour 20.

On peut ainsi réaliser une coupe régulière, selon une direction bien maîtrisée par l'unité de synchronisation 30.

L'unité de synchronisation 30 sera de préférence une unité électronique, préférentiellement programmable.

De préférence, ladite unité de synchronisation 30 permettra d'ajuster, en fonction de la bande continue 3 à traiter et donc de l'orientation du tracé de coupe souhaité, un rapport de synchronisation K30 entre la vitesse du mouvement d'enroulement M20 et la vitesse du mouvement de coupe M10 :

$$M10 = K30*M20$$

De préférence, le tambour 20 sera entraîné en rotation par un moteur de tambour, préférentiellement un moteur électrique, placé sous la dépendance de l'unité de synchronisation 30 et permettant de générer le mouvement d'enroulement M20.

Selon une possibilité de réalisation, le mouvement de coupe M10 pourrait être généré, indirectement, par le moteur de tambour, en utilisant par exemple un mécanisme de transmission débrayable qui relie le moteur de tambour à l'outil de coupe 10, et qui peut être alternativement embrayé et débrayé par l'unité de synchronisation 30. Le rapport de transmission dudit mécanisme de transmission, lorsque celui-ci est embrayé, correspondrait alors au rapport de synchronisation K30 susmentionné.

Cependant, de préférence, l'outil de coupe 10 disposera, pour générer le mouvement de coupe M10, de son propre moteur d'entraînement, dit « moteur de coupe », distinct du moteur de tambour. Ici encore, il s'agira de préférence d'un moteur électrique, ce qui simplifiera le pilotage par l'unité de synchronisation 30, ici une unité de synchronisation 30 électronique, ainsi que le réglage du rapport de synchronisation K30.

De préférence, l'outil de coupe 10 est guidé en translation rectiligne selon une direction de coupe L10 qui est perpendiculaire à la direction longitudinale L3 de la bande continue 3.

Un tel agencement orthogonal de la direction de coupe L10 par rapport à la direction longitudinale d'enroulement L3, et donc l'agencement orthogonal des composantes de mouvement de coupe M10 et d'enroulement M20, qui correspondent ici chacune à une composante de déplacement en translation rectiligne, permet d'asservir de manière simple le mouvement de coupe M10 par rapport au mouvement d'enroulement M20, puisque la direction résultante du tracé de coupe par rapport à la bande continue 3 est orientée, en oblique par rapport à la direction longitudinale L3, selon un angle dont la tangente est alors égale à la valeur du rapport de synchronisation K30.

En outre, un tel agencement orthogonal est invariant par symétrie plane selon un plan sagittal perpendiculaire à la bande continue 3 et contenant la direction longitudinale L3, plan sagittal qui est ici normal à l'axe de rotation Z20 du tambour 20.

De ce fait, on peut, dans l'absolu, choisir de sectionner la bande continue 3 depuis sa lisière gauche 3A jusqu'à sa lisière droite3B, ou inversement, depuis sa lisière droite 3B jusqu'à sa lisière gauche 3A, ce qui permet notamment d'adapter le dispositif 1 à l'orientation des fils de renfort 5, que lesdits fils de renfort 5 soient orientés vers la gauche par rapport à la direction longitudinale L3 ou au contraire vers la droite. Le dispositif 1 est donc particulièrement polyvalent.

Bien entendu, si l'outil de coupe 10 est formé par une lame 12, le tranchant de ladite lame 12 sera orienté en conséquence.

En particulier ladite lame 12 pourra avantageusement être à double tranchant, de sorte à pouvoir opérer indifféremment dans les deux sens.

De même, la pointe de perforation 13 de ladite lame 12 pourra présenter un double tranchant, de sorte à pouvoir perforer la bande continue 3 indifféremment à proximité de la lisière gauche 3A ou de la lisière droite 3B, avant que la lame 12 ne poursuive son mouvement de coupe M10 vers, et (au moins) jusqu'à, la lisière 3B, 3A opposée.

On notera également que l'outil de coupe 10 est de préférence agencé juste en amont du tambour 20, entre la bobine d'entrée 7 qui déroule la bande continue 3 et le tambour 20 sur lequel la nappe de renfort 4 est utilisée, de sorte à ce que la nappe de renfort 4 soit effectivement utilisée sitôt détachée de la bande continue 3.

On évite ainsi d'altérer les propriétés de ladite nappe de renfort 4, notamment les propriétés adhésives (« collant ») de la gomme 6.

Le dispositif 1 contribue ainsi à réduire les pertes de matière afin d'éviter tout gaspillage.

Le dispositif 1 est par ailleurs avantageusement agencé de manière à permettre la jonction du front avant 4F avec le front arrière 4R.

La nappe de renfort 4 peut ainsi être refermée en anneau sur elle-même, par exemple pour former une nappe sommet constitutive d'une partie de l'armature d'un bandage pneumatique, et plus particulièrement d'un bandage pneumatique à carcasse radiale.

De préférence, la longueur de la nappe de renfort 4 comprise entre le front avant 4F et le front arrière 4R correspond donc à la circonférence du tambour 20, de sorte à permettre auxdits fronts avant et arrière 4F, 4R d'opérer une jonction par aboutage sur eux-mêmes au terme du mouvement d'enroulement M20 de la nappe de renfort 4 sur le tambour 20, tel que cela est illustré sur les figures 5A et 5B.

Avantageusement, en choisissant une longueur de nappe de renfort 4 égale à la développée du périmètre du tambour 20, en tenant compte le cas échéant de l'épaisseur de ladite nappe de renfort 4, on évite de créer à la jonction entre les fronts avant 4F et arrière 4R de la nappe de renfort 4 une surépaisseur qui serait liée à un chevauchement desdits fronts 4F, 4R, et plus particulièrement à un chevauchement des fils de renfort 5 situés au voisinage immédiat desdits fronts 4F, 4R, ou au contraire de laisser subsister, à ladite jonction, un vide entre lesdits fronts 4F, 4R.

De préférence, tel que cela a déjà été évoqué plus haut, la bande continue 3, et par conséquent la nappe de renfort 4 qui en est issue, est renforcée par un réseau de fils de renforts 5 qui sont disposés parallèlement entre eux et orientés selon un angle A5 prédéterminé non nul, et de préférence strictement compris entre 15 degrés et 70 degrés, dit « angle de nappe » A5, par rapport à la direction longitudinale L3.

De préférence, l'outil de coupe 10 peut alors être piloté de manière à s'engager dans un espace intercalaire 8 compris entre deux fils de renfort 5 successifs, tel que cela est visible sur les figures 3A et 6.

En pareil cas, l'unité de synchronisation 30 définit de préférence un rapport de synchronisation K30, entre le mouvement de coupe M10 et le mouvement d'enroulement M20, qui correspond à l'angle de nappe A5, de sorte que le front arrière 4R de la nappe de renfort généré par l'outil de coupe 10 s'étend parallèlement aux fils de renfort 5 qui délimitent l'espace intercalaire 8.

De préférence, on aura ainsi :

$$K30 = M10/M20 = \tan(A5)$$

Le choix d'un rapport de synchronisation K30 défini par la valeur de l'angle de nappe A5 permet avantageusement de s'assurer que le déplacement relatif de l'outil de coupe 10 par rapport à la bande continue 3 s'effectue bien en oblique selon une direction parallèle à celle des fils de renfort 5.

De préférence, le dispositif 1, et plus particulièrement le système d'alimentation 2, comprend un transporteur 40 qui est agencé pour soutenir une portion de la bande continue 3 dite « pointe » 41, 42 qui forme un angle aigu compris entre d'une part le front avant 4F de la bande continue 3, destiné à former le front avant 4F de la nappe de renfort 4 à enrouler, et d'autre part la lisière 3A de ladite bande continue 3 par laquelle débute l'action de l'outil de coupe 10.

On notera que, par commodité de description, on pourra assimiler le front avant de la bande continue 3 avec le front avant 4F de la nappe de renfort 4 et ainsi en particulier utiliser la même référence 4F pour désigner ces éléments sur les figures.

Afin d'assurer sa prise sur la bande continue 3, le transporteur 40 pourra être pourvu de tout préhenseur approprié, par exemple d'un préhenseur à vide, ou encore, de préférence, d'un préhenseur magnétique à aimant ou à électroaimant.

La forme, la taille et l'orientation du préhenseur pourront faire l'objet de variations sans sortir du cadre de l'invention.

A titre d'exemple, le préhenseur du transporteur 40 pourra comporter, tel que cela est illustré schématiquement sur les figures 1A, 4A et 5A, une barrette, de préférence une barrette aimantée, possédant une semelle plane qui vient en appui contre la pointe 41, 42 de la bande continue 3. Ladite semelle pourra éventuellement être orientée sensiblement selon l'angle de nappe A5, et donc sensiblement parallèlement aux fronts 4F, 4R de la nappe de renfort 4.

De préférence, l'unité de synchronisation 30 est agencée pour piloter le transporteur 40 de telle manière que ledit transporteur 40 soutienne et accompagne tout d'abord une première pointe 41 de la bande continue 3, qui correspond au front avant 4F d'une première nappe de renfort 4, jusqu'au tambour 20, et pose ladite première pointe 41 en prise sur ledit tambour 20.

Ainsi, une première fonction du transporteur 40 est donc, avant l'opération de coupe, d'amener la pointe 41 de la bande continue 3 jusqu'au tambour 20, et d'ancrer ladite bande continue 3 sur ledit tambour 20 par la pointe 41, afin d'engager ladite bande continue 3 par son front avant 4F sur le tambour 20, en vue de l'opération d'enroulement.

On notera que le transfert de la pointe 41 de la bande continue 3 du transporteur 40 au tambour 20 peut s'effectuer par simple pression de contact, en utilisant l'adhérence naturelle (ou « collant ») de la gomme 6 sur le tambour 20.

L'unité de synchronisation 30 est également agencée pour piloter le transporteur 40 de telle manière que, après avoir posé et ancré la première pointe 41 sur le tambour 20, ledit transporteur 40 assure ensuite, pendant l'opération d'enroulement de la première nappe de renfort 4 et pendant l'opération de coupe permettant de détacher ladite première nappe de renfort 4 de la bande continue 3, et tel que cela est illustré sur les figures 2A, 3A et 4A, un soutien et un accompagnement de ladite bande continue 3 en venant en prise sur ladite bande continue 3 à l'emplacement d'une future seconde pointe 42, qui correspond à la pointe d'une seconde nappe de renfort qui vient à la suite de la première nappe de renfort 4, et en accompagnant le déplacement de la bande continue 3 induit par le mouvement d'enroulement M20 en cours de la première nappe de renfort 4, et ce afin de stabiliser ladite bande continue 3 au niveau de la seconde pointe 42 pendant l'opération de coupe qui permet de détacher la première nappe de renfort 4 de ladite bande continue 3.

Avantageusement, le transporteur 40, et plus particulièrement la semelle de celui-ci, pourra ainsi tenir le rôle d'enclume qui soutient la bande continue 3 à l'encontre des efforts exercés sur ladite bande continue 3 par l'outil de coupe 10, et en particulier qui soutient la bande continue 3 lors de la pénétration de la pointe de perforation 13 de la lame 12 au début de la séquence de coupe du front arrière 4R.

En tout état de cause, le transporteur 40 est donc de préférence agencé pour effectuer des va-et-vient en progressant d'abord vers l'avant, pour déposer une première pointe 41 sur le tambour 20, correspondant au front avant de la bande continue 3 (figures 1A et 1B), puis lâcher ladite première pointe 41, puis revenir en arrière le long de la bande continue 3 pour saisir ladite bande continue 3 au niveau d'une seconde future pointe 42 correspondant à une nappe de renfort suivante (figure 2A, 2B), afin de repartir ensuite vers l'avant, dans le sens d'enroulement S20, et en suivant le mouvement d'enroulement M20, pour accompagner ladite bande continue 3 jusqu'à l'emplacement de l'outil de coupe 10 (figures 2A, 2B), soutenir la bande continue 3 pendant toute l'opération de coupe à la volée (figures 3A, 3B, 4A, 4B), puis, ultérieurement, acheminer la nouvelle seconde pointe 42 issue de la coupe jusqu'au tambour 20 lors du cycle de pose suivant, etc.

Bien entendu, l'unité de synchronisation 30 permettra de synchroniser les mouvements du transporteur 40 avec le mouvement d'enroulement M20, et donc avec le mouvement de coupe M10.

On notera que, de préférence, le transporteur 40 pourra être piloté par l'unité de synchronisation 30 de telle manière que, après l'opération de coupe, ledit transporteur 40 manoeuvre la bande continue 3, et plus particulièrement la seconde pointe 42, vers l'arrière, c'est-à-dire opère un mouvement d'éloignement par rapport au tambour 20, dans le sens opposé au sens d'enroulement S20, de sorte à écarter la bande continue 3 du tambour 20 et ainsi dégager l'accès audit tambour 20 pour la fin de l'opération d'enroulement de la nappe de renfort 4 en cours de pose, tel que cela est illustré sur les figures 5A et 5B.

Ce dégagement facilite la mise en place ultérieure sur ce même tambour 20 d'autres éléments constitutifs du bandage qui viennent se superposer à la nappe de renfort 4 ainsi enroulée, et/ou une éventuelle intervention de l'opérateur, ou bien encore le retrait du bandage du tambour 20 après que l'assemblage dudit bandage, ou l'assemblage du sousensemble dudit bandage que l'on souhaite réaliser sur le tambour 20, est achevé.

Par ailleurs, le transporteur 40 peut éventuellement être utilisé pour exercer sur la bande continue 3, à l'encontre du mouvement d'enroulement M20, un effort de retenue en traction qui permet d'ajuster la tension longitudinale de la nappe de renfort 4 pendant l'opération d'enroulement. De la sorte, on facilite voire on automatise l'adaptation de la longueur de ladite nappe de renfort 4 à la circonférence du tambour 20, pour obtenir un aboutage parfait des fronts 4F, 4R de ladite nappe de renfort 4.

Par ailleurs, on pourra prévoir, tel que cela est illustré sur les figures 1B, 2B, 3B, 4B, un rouleau presseur 43, qui est précontraint élastiquement contre le tambour 20, par exemple au moyen d'un ressort de rappel, et monté contrarotatif par rapport audit tambour 20, afin de guider la nappe de renfort 4 et d'appliquer efficacement et régulièrement ladite nappe de renfort 4, ainsi prise en sandwich entre le tambour 20 et le rouleau presseur 43, contre la surface dudit tambour 20.

De préférence, le dispositif 1 comprend un détecteur optique (non représenté) qui permet à l'unité de synchronisation 30 de définir, par rapport à un point de repère qui est associé à la bande continue 3, qui se trouve en cours d'enroulement sur le tambour 20, une position d'attaque au niveau de laquelle l'outil de coupe 10 engage la bande continue 3 pour générer le front arrière 4R de ladite nappe de renfort 4.

A titre d'exemple, le point de repère pourra être matérialisé par une marque de peinture réalisée sur la bande continue 3.

En pareil cas, le détecteur optique, tel qu'une caméra ou une cellule photosensible, sera capable de distinguer par contraste la couleur de la marque de peinture du fond constitué par le matériau constitutif de la bande continue 3, typiquement la gomme 6.

Ledit détecteur optique pourra alors être placé au-dessus ou en-dessous de la bande continue 3, en amont et à une distance connue de l'emplacement de l'outil de coupe 10 le long de la direction longitudinale L3, typiquement entre la bobine d'entrée 7 et ledit dispositif de coupe 10.

La marque de peinture pourra par exemple former un trait qui coïncide spatialement avec l'espace interstitiel 8 compris entre deux fils de renfort 5 successifs, à l'emplacement de la bande continue 3 où l'on souhaite effectuer la coupe.

Selon un autre exemple de mise en oeuvre possible, le point de repère pourra correspondre au front avant 4F de la nappe de renfort 4, lorsque ledit front avant 4F passe par une position prédéterminée, telle qu'une position azimutale donnée autour de l'axe de rotation Z20 du tambour 20.

En pareil cas, le détecteur optique pourra par exemple former un capteur de ressaut, capable de détecter le changement du taux de réflexion d'un faisceau lumineux, tel qu'un faisceau laser, pointé sur la surface du tambour 20 à la position azimutale choisie, lorsque le front avant de nappe 4F franchit, du fait de la rotation d'enroulement, la position azimutale dudit faisceau lumineux, et que la surface réfléchissante passe de la surface nue du tambour 20, non recouverte par la nappe de renfort 4, à une surface couverte par ladite nappe de renfort 4.

En variante, le détecteur optique pourra créer, entre un émetteur et un récepteur ou entre un émetteur et un réflecteur qui coopère avec ledit émetteur, un faisceau lumineux qui croise la trajectoire de la bande continue 3 en amont du tambour 20, ici entre la bobine d'entrée 7 et le tambour 20, de telle sorte que lorsque ladite bande continue 3 est acheminée vers le tambour 20 par le transporteur 40, la pointe 41 correspondant au front avant 4F de ladite bande continue 3 vient couper ledit faisceau, ce qui permet la détection dudit front avant 4F.

On notera qu'une prise de repère reposant sur la détection du front avant 4F de la bande continue 3 est avantageusement plus précise et moins sensible à une éventuelle pollution qu'une prise de repère reposant sur une marque de peinture.

Ceci étant, quelle que soit la nature du point de repère utilisé, le capteur optique pourra bien entendu être positionné et étalonné en fonction de la configuration du dispositif 1 et/ou des caractéristiques de la bande continue 3 à traiter (largeur W3, angle de nappe A5, etc.)

Bien entendu, l'invention concerne également en tant que tel un procédé reprenant tout ou partie des caractéristiques décrite ci-dessus.

En particulier, l'invention concerne un procédé de fabrication de bandage, notamment de bandage pneumatique, au cours duquel on achemine une bande continue 3 selon une direction longitudinale L3, on engage un front avant 4F de ladite bande continue sur un tambour 20 et l'on entraîne ledit tambour en rotation dans un sens dit « sens d'enroulement » S20 de sorte à enrouler ladite bande continue 3 sur la circonférence dudit tambour, selon un mouvement dit « mouvement d'enroulement » M20, et au cours duquel on sectionne ladite bande continue 3 grâce à un outil de coupe 10 que l'on déplace sur toute la largeur W3 de ladite bande continue, selon un mouvement de coupe M10 qui est orienté transversalement à la direction longitudinale L3 et qui permet de détacher de la bande continue 3 une nappe de renfort 4 qui s'étend, selon la direction longitudinale L3, depuis le front avant 4F de la bande continue jusqu'à un front arrière 4R généré par le mouvement de coupe.

Selon ce procédé, on synchronise automatiquement le mouvement de coupe M10 avec le mouvement d'enroulement M20 de manière à pouvoir détacher à la volée la nappe de renfort 4 du reste de la bande continue 3, pendant que ladite nappe de renfort 4 est en prise sur le tambour 20 et animée, avec la bande continue 3, d'une vitesse de déplacement non nulle dans le sens d'enroulement S20.

Comme indiqué plus haut, conformément à la synchronisation mise en oeuvre, l'outil de coupe 10 décrit la bande continue 3 de part en part, d'une lisière 3A jusqu'à l'autre lisière 3B, dans un seul et même sens le long de la direction de coupe L10, tandis que le tambour 20, et donc la bande continue 3 engagée sur ledit tambour 20, sont animés d'un mouvement d'enroulement M20 continu, de vitesse non nulle et de sens constant.

Ledit procédé pourra par ailleurs comprendre l'une, l'autre, ou toute combinaison, et en particulier l'ensemble, des étapes successives illustrées par les figures 1A, 1B à 5A, 5B, et détaillées plus haut.

En particulier, on pourra, après avoir posé la pointe 41 de la bande continue 3 sur le tambour 20 et commencé l'enroulement de ladite bande continue 3 sur ledit tambour 20, interrompre provisoirement le mouvement d'enroulement M20, et donc stopper la bande continue 3, le temps de perforer ladite bande continue 3 au moyen de la pointe de perforation 13 de l'outil de coupe 10, puis reprendre conjointement le mouvement d'enroulement M20 et le mouvement de coupe M10 pour détacher la nappe de renfort 4 du reste de la bande continue 3 en générant le front arrière 4R.

De façon particulièrement préférentielle, l'opération de coupe est réalisée sur une bande continue 3 contenant des fils de renfort 5, et en choisissant un rapport de synchronisation K30 tel qu'il empêche un sectionnement desdits fils de renfort 5, et plus particulièrement un sectionnement de l'un quelconque desdits fils de renfort 5, afin de ne pas dégrader les performances de ladite bande continue 3.

Après l'opération de coupe, la queue 44 de la nappe de renfort 4, portant le front arrière 4R, est à son tour posée et enroulée sur le tambour 20 à la suite de la pointe 41.

Ce faisant, le procédé comprend ainsi, suite à l'étape de coupe qui permet de détacher la nappe de renfort 4 du reste de la bande continue 3, une étape de jonction au cours de laquelle on joint le front arrière 4R avec le front avant 4F de sorte à fermer sur elle-même la nappe de renfort 4 posée sur le tambour 20, tel que cela est visible sur la figure 5B.

La nappe de renfort 4 formera ainsi une structure annulaire dont le diamètre est défini par le tambour 20.

## Revendications

1. Dispositif (1) de fabrication de bandage, notamment de bandage pneumatique, ledit dispositif (1) comprenant :

   - un système d'alimentation (2) agencé pour alimenter ledit dispositif de fabrication avec une bande (3), dite « bande continue » (3), acheminée selon une direction longitudinale (L3),
   - un outil de coupe (10) qui est monté mobile selon une direction de coupe (L10) transverse à la direction longitudinale (L3), de sorte à pouvoir opérer un mouvement dit « mouvement de coupe » (M10) qui permet de sectionner ladite bande continue (3) dans sa largeur (W3) et ainsi de détacher de la bande continue (3) une nappe de renfort (4) qui s'étend, selon la direction longitudinale (L3), depuis un front avant (4F) jusqu'à un front arrière (4R),
   - un tambour (20), qui est agencé pour pouvoir être entraîné en rotation selon un sens dit « sens d'enroulement » (S20) qui permet d'enrouler la nappe de renfort (4) sur la circonférence dudit tambour, selon un mouvement dit « mouvement d'enroulement » (M20),

   ledit dispositif de fabrication étant **caractérisé en ce qu'**il comprend une unité de synchronisation (30) agencée pour synchroniser automatiquement le mouvement de coupe (M10) avec le mouvement d'enroulement (M20), de manière à entraîner l'outil de coupe (10) en déplacement sur toute la largeur (W3) de la bande continue (3) afin de détacher la nappe de renfort (4) de la bande continue (3) en générant le front arrière (4R) de ladite nappe de renfort, tandis que le front avant (4F) de ladite nappe de renfort (4) est en prise sur le tambour (20) et que la bande continue (3) est entraînée avec ladite nappe de renfort (4) à une vitesse non nulle dans le sens d'enroulement (S20) pour accompagner le mouvement d'enroulement (M20) en cours de ladite nappe de renfort (4) sur le tambour (20).

2. Dispositif selon la revendication 1 **caractérisé en ce qu'**il est configuré de telle sorte que la longueur de la nappe de renfort (4) comprise entre le front avant (4F) et le front arrière (4R) correspond à la circonférence du tambour (20), de sorte à permettre auxdits fronts avant et arrière (4F, 4R) d'opérer une jonction par aboutage sur eux-mêmes au terme du mouvement d'enroulement (M20) de la nappe de renfort (4) sur le tambour (20).

3. Dispositif selon la revendication 1 ou 2 **caractérisé en ce que** la bande continue (3), et par conséquent la nappe de renfort (4) qui en est issue, est renforcée par un réseau de fils de renforts (5) qui sont disposés parallèlement entre eux et orientés selon un angle (A5) prédéterminé non nul, de préférence strictement compris entre 15 degrés et 70 degrés, dit « angle de nappe » (A5), par rapport à la direction longitudinale (L3), **en ce que** l'outil de coupe (10) est piloté de manière à s'engager dans un espace intercalaire (8) compris entre deux fils de renfort (5) successifs, et **en ce que** l'unité de synchronisation (30) définit un rapport de synchronisation (K30) entre le mouvement de coupe (M10) et le mouvement d'enroulement (M20) qui correspond audit angle de nappe (A5), de sorte que le front arrière (4R) de la nappe de renfort généré par l'outil de coupe (10) s'étend parallèlement aux fils de renfort (5) qui délimitent ledit espace intercalaire (8).

4. Dispositif selon l'une quelconque des revendications précédentes **caractérisé en ce que** l'outil de coupe (10) est guidé en translation rectiligne selon une direction de coupe (L10) qui est perpendiculaire à la direction longitudinale (L3) de la bande continue (3).

5. Dispositif selon l'une quelconque des revendications précédentes **caractérisé en ce qu'**il comprend un transporteur (40) agencé pour soutenir une portion de la bande continue (3) dite « pointe » (41, 42) qui forme un angle aigu compris entre d'une part le front avant (4F) de la bande continue (3), destiné à former le front avant (4F) de la nappe de renfort à enrouler, et d'autre part la lisière (3A) de ladite bande continue (3) par laquelle débute l'action de l'outil de coupe (10), et **en ce que** l'unité de synchronisation (30) est agencée pour piloter ledit transporteur (40) de telle manière que ledit transporteur (40) soutienne et accompagne tout d'abord une première pointe (41) de la bande continue (3), qui correspond au front avant (4F) d'une première nappe de renfort (4), jusqu'au tambour (20), et pose ladite première pointe (41) en prise sur ledit tambour (20), puis que ledit transporteur (40) assure ensuite, pendant l'opération d'enroulement de ladite première nappe de renfort (4) et pendant l'opération de coupe permettant de détacher ladite première nappe de renfort (4) de ladite bande continue (3), un soutien et un accompagnement de ladite bande continue (3) en venant en prise sur ladite bande continue (3) à l'emplacement d'une future seconde pointe (42), qui correspond à la pointe d'une seconde nappe de renfort qui vient à la suite de la première nappe de renfort (4), et en accompagnant le déplacement de la bande continue (3) induit par le mouvement d'enroulement (M20) en cours de la première nappe de renfort (4), et ce afin de stabiliser ladite bande continue (3) au niveau de la seconde pointe (42) pendant l'opération de coupe qui permet de détacher la première nappe de renfort (4) de ladite bande continue (3).

**6.** Dispositif selon l'une quelconque des revendications précédentes **caractérisé en ce qu'**il comprend un détecteur optique permettant à l'unité de synchronisation (30) de définir, par rapport à un point de repère associé à la bande continue (3) qui est en cours d'enroulement sur le tambour (20), tel que par exemple un point de repère matérialisé par une marque de peinture réalisée sur la bande continue (3) ou bien encore un point de repère correspondant au front avant (4F) de la nappe de renfort lorsque ledit front avant (4F) passe par une position prédéterminée, telle qu'une position azimutale donnée autour de l'axe de rotation (Z20) du tambour, une position d'attaque au niveau de laquelle l'outil de coupe (10) engage la bande continue (3) pour générer le front arrière (4R) de ladite nappe de renfort.

**7.** Procédé de fabrication de bandage, notamment de bandage pneumatique, au cours duquel on achemine une bande continue (3) selon une direction longitudinale (L3), on engage un front avant (4F) de ladite bande continue sur un tambour (20) et l'on entraîne ledit tambour en rotation dans un sens dit « sens d'enroulement » (S20) de sorte à enrouler ladite bande continue (3) sur la circonférence dudit tambour (20), selon un mouvement dit « mouvement d'enroulement » (M20), et au cours duquel on sectionne ladite bande continue (3) grâce à un outil de coupe (10) que l'on déplace sur toute la largeur (W3) de ladite bande continue, selon un mouvement de coupe (M10) qui est orienté transversalement à la direction longitudinale (L3) et qui permet de détacher de la bande continue une nappe de renfort (4) qui s'étend, selon la direction longitudinale, depuis le front avant (4F) de la bande continue jusqu'à un front arrière (4R) généré par le mouvement de coupe (M10), ledit procédé étant **caractérisé en ce que** l'on synchronise automatiquement le mouvement de coupe (M10) avec le mouvement d'enroulement (M20) de manière à pouvoir détacher à la volée la nappe de renfort (4) du reste de la bande continue

(3), pendant que ladite nappe de renfort (4) est en prise sur le tambour (20) et animée, avec la bande continue (3), d'une vitesse de déplacement non nulle dans le sens d'enroulement (S20).

**Patentansprüche**

**1.** Vorrichtung (1) zur Herstellung eines Reifens, insbesondere eines Luftreifens, wobei die Vorrichtung (1) umfasst:

- ein Zuführungssystem (2), das dazu ausgebildet ist, der Herstellungsvorrichtung einen Streifen (3), "Endlosstreifen" (3) genannt, zuzuführen, der entlang einer Längsrichtung (L3) transportiert wird,
- ein Schneidwerkzeug (10), das entlang einer Schneidrichtung (L10) quer zur Längsrichtung (L3) beweglich gelagert ist, so dass es eine "Schneidbewegung" (M10) genannte Bewegung vornehmen kann, die es ermöglicht, den Endlosstreifen (3) in seiner Breite (W3) zu durchtrennen und so von dem Endlosstreifen (3) eine Karkassenlage (4) zu lösen, die sich, entlang der Längsrichtung (L3), von einer vorderen Stirnseite (4F) bis zu einer hinteren Stirnseite (4R) erstreckt,
- eine Trommel (20), die dazu ausgebildet ist, entlang einer "Wickelrichtung" (S20) genannten Richtung drehangetrieben werden zu können, die es ermöglicht, die Karkassenlage (4) über den Umfang der Trommel gemäß einer "Wickelbewegung" (M20) genannten Bewegung aufzuwickeln, wobei die Herstellungsvorrichtung **dadurch gekennzeichnet ist, dass** sie eine Synchronisationseinheit (30) umfasst, die dazu ausgebildet ist, die Schneidbewegung (M10) mit der Wickelbewegung (M20) automatisch zu synchronisieren, so dass das Schneidwerkzeug (10) über die gesamte Breite (W3) des Endlosstreifens (3) mitbewegt wird, um die Karkassenlage (4) von dem Endlosstreifen (3) zu lösen, wobei die hintere Stirnseite (4R) der Karkassenlage erzeugt wird, während die vordere Stirnseite (4F) der Karkassenlage (4) auf der Trommel (20) im Eingriff ist und der Endlosstreifen (3) mit der Karkassenlage (4) mit einer Geschwindigkeit ungleich null in Wickelrichtung (S20) mitgenommen wird, um die laufende Wickelbewegung (M20) der Karkassenlage (4) auf der Trommel (20) zu begleiten.

**2.** Vorrichtung nach Anspruch 1, **dadurch gekennzeichnet, dass** sie so ausgestaltet ist, dass die Länge der Karkassenlage (4) zwischen der vorderen Stirnseite (4F) und der hinteren Stirnseite (4R) dem Umfang der Trommel (20) entspricht, so dass die vordere und die hintere Stirnseite (4F, 4R) am Ende der Wickelbewegung (M20) der Karkassenlage (4) auf der Trommel (20) eine Stumpfstoßverbindung miteinander vornehmen können.

3. Vorrichtung nach Anspruch 1 oder 2, **dadurch gekennzeichnet, dass** der Endlosstreifen (3), und infolgedessen die Karkassenlage (4), die daraus hervorgegangen ist, durch ein Netz aus Verstärkungskorden (5) verstärkt wird, die parallel zueinander angeordnet sind und gemäß einem vorbestimmten Winkel (A5) ungleich null, bevorzugt strikt zwischen 15 Grad und 70 Grad, "Lagenwinkel" (A5) genannt, in Bezug auf die Längsrichtung (L3) ausgerichtet sind, dadurch, dass das Schneidwerkzeug (10) so gesteuert wird, dass es in einem Zwischenraum (8) zwischen zwei aufeinander folgenden Verstärkungskorden (5) ansetzt, und dadurch, dass die Synchronisationseinheit (30) ein Synchronisationsverhältnis (K30) zwischen der Schneidbewegung (M10) und der Wickelbewegung (M20) definiert, das dem Lagenwinkel (A5) entspricht, so dass sich die von dem Schneidwerkzeug (10) erzeugte hintere Stirnseite (4R) der Karkassenlage, parallel zu den Verstärkungskorden (5) erstreckt, die den Zwischenraum (8) begrenzen.

4. Vorrichtung nach einem der vorhergehenden Ansprüche, **dadurch gekennzeichnet, dass** das Schneidwerkzeug (10) entlang einer Schneidrichtung (L10) geradlinig translatorisch geführt wird, die senkrecht zur Längsrichtung (L3) des Endlosstreifens (3) ist.

5. Vorrichtung nach einem der vorhergehenden Ansprüche, **dadurch gekennzeichnet, dass** sie eine Transporteinrichtung (40) umfasst, die dazu ausgebildet ist, einen "Spitze" (41, 42) genannten Abschnitt des Endlosstreifens (3) zu stützen, der einen spitzen Winkel zwischen der vorderen Stirnseite (4F) des Endlosstreifens (3), die dazu bestimmt ist, die vordere Stirnseite (4F) der aufzuwickelnden Karkassenlage zu bilden, einerseits und der Kante (3A) des Endlosstreifens (3), an der die Aktion des Schneidwerkzeugs (10) beginnt, andererseits bildet, und dadurch, dass die Synchronisationseinheit (30) dazu ausgebildet ist, die Transporteinrichtung (40) so zu steuern, dass die Transporteinrichtung (40) zunächst eine erste Spitze (41) des Endlosstreifens (3), die der vorderen Stirnseite (4F) einer ersten Karkassenlage (4) entspricht, bis zu der Trommel (20) stützt und begleitet und die erste Spitze (41) im Eingriff auf der Trommel (20) ablegt, dass die Transporteinrichtung (40) dann anschließend, während des Wickelvorgangs der ersten Karkassenlage (4) und während des Schneidvorgangs, der es ermöglicht, die erste Karkassenlage (4) von dem Endlosstreifen (3) zu lösen, ein Stützen und ein Begleiten des Endlosstreifens (3) gewährleistet, wobei sie an dem Endlosstreifen (3) an der Stelle einer zukünftigen zweiten Spitze (42) in Eingriff gelangt, die der Spitze einer zweiten Karkassenlage entspricht, die auf die erste Karkassenlage (4) folgt, und die Bewegung des Endlosstreifens (3), die durch die laufende Wickelbewegung (M20) der ersten Karkassenlage (4) induziert wird, begleitet, und dies, um den Endlosstreifen (3) an der zweiten Spitze (42) während des Schneidvorgangs zu stabilisieren, der es ermöglicht, die erste Karkassenlage (4) von dem Endlosstreifen (3) zu lösen.

6. Vorrichtung nach einem der vorhergehenden Ansprüche, **dadurch gekennzeichnet, dass** sie einen optischen Detektor umfasst, der es der Synchronisationseinheit (30) ermöglicht, in Bezug auf einen Bezugspunkt, der dem Endlosstreifen (3) zugeordnet ist, der gerade auf die Trommel (20) gewickelt wird, wie beispielsweise einen Bezugspunkt, der durch eine aus dem Endlosstreifen (3) ausgeführte Farbmarkierung dargestellt wird, oder aber einen Bezugspunkt, der der vorderen Stirnseite (4F) der Karkassenlage entspricht, wenn die vordere Stirnseite (4F) durch eine vorbestimmte Position verläuft, wie etwa eine gegebene azimutale Position um die Drehachse (Z20) der Trommel herum, eine Angriffsposition zu definieren, an der das Schneidwerkzeug (10) am Endlosstreifen (3) ansetzt, um die hintere Stirnseite (4R) der Karkassenlage zu erzeugen.

7. Verfahren zur Herstellung eines Reifens, insbesondere eines Luftreifens, in dessen Verlauf man einen Endlosstreifen (3) entlang einer Längsrichtung (L3) transportiert, man eine vordere Stirnseite (4F) des Endlosstreifens an eine Trommel (20) ansetzt und man die Trommel in eine "Wickelrichtung" (S20) genannte Richtung drehantreibt, so dass der Endlosstreifen (3) über den Umfang der Trommel (20) entlang einer "Wickelrichtung" (M20) genannten Richtung aufgewickelt wird, und in dessen Verlauf man den Endlosstreifen (3) mithilfe eines Schneidwerkzeugs (10) durchtrennt, das man über die gesamte Breite (W3) des Endlosstreifens gemäß einer Schneidbewegung (M10) bewegt, die quer zu der Längsrichtung (L3) ausgerichtet ist und die es ermöglicht, von dem Endlosstreifen eine Karkassenlage (4) zu lösen, die sich entlang der Längsrichtung von der vorderen Stirnseite (4F) des Endlosstreifens bis zu einer hinteren Stirnseite (4R), die durch die Schneidbewegung (M10) erzeugt wird, erstreckt, wobei das Verfahren **dadurch gekennzeichnet ist, dass** man die Schneidbewegung (M10) automatisch mit der Wickelbewegung (M20) synchronisiert, so dass die Karkassenlage (4) vom Rest des Endlosstreifens (3) synchron gelöst werden kann, während die Karkassenlage (4) auf der Trommel (20) im Eingriff ist und, mit dem Endlosstreifen (3), mit einer Bewegungsgeschwindigkeit ungleich null in Wickelrichtung (S20) bewegt wird.

**Claims**

1. Tyre-building device (1), notably for building pneumatic tyres, said device (1) comprising:

   - a feed system (2) arranged to feed said building device with a strip (3), called "continuous strip" (3), conveyed in a longitudinal direction (L3),
   - a cutting tool (10) which is mounted to move in a cutting direction (L10) transversal to the longitudinal direction (L3), so as to be able to perform a movement, called "cutting movement" (M10), which makes it possible to cut said continuous strip (3) across its width (W3) and thus detach from the continuous strip (3) a reinforcing ply (4) which extends, in the longitudinal direction (L3), from a front edge (4F) to a rear edge (4R),
   - a drum (20), which is arranged to be able to be driven in rotation in a direction called "winding direction" (S20) which allows the reinforcing ply (4) to be wound over the circumference of said drum, by a movement called "winding movement" (M20),

   said building device being **characterized in that** it comprises a synchronization unit (30) arranged to automatically synchronize the cutting movement (M10) with winding movement (M20), so as to drive the cutting tool (10) to move across the entire width (W3) of the continuous strip (3) in order to detach the reinforcing ply (4) from the continuous strip (3) by generating the rear edge (4R) of said reinforcing ply, while the front edge (4F) of said reinforcing ply (4) is engaged on the drum (20) and the continuous strip (3) is driven with said reinforcing ply (4) at a non-zero speed in the winding direction (S20) to accompany the ongoing winding movement (M20) of said reinforcing ply (4) on the drum (20).

2. Device according to Claim 1, **characterized in that** it is configured such that the length of the reinforcing ply (4) included between the front edge (4F) and the rear edge (4R) corresponds to the circumference of the drum (20), so as to allow said front and rear edges (4F, 4R) to make a join by butt-jointing on themselves at the end of the winding movement (M20) of the reinforcing ply (4) on the drum (20).

3. Device according to Claim 1 or 2, **characterized in that** the continuous strip (3), and consequently the reinforcing ply (4) which is derived therefrom, is reinforced by a network of reinforcing threads (5) which are disposed parallel to one another and oriented by a predetermined non-zero angle (A5), preferably strictly lying between 15 degrees and 70 degrees, called "ply angle" (A5), with respect to the longitudinal direction (L3), **in that** the cutting tool (10) is controlled so as to engage in a dividing space (8) contained between two successive reinforcing threads (5), and **in that** the synchronization unit (30) defines a synchronization ratio (K30) between the cutting movement (M10) and the winding movement (M20) which corresponds to said ply angle (A5), such that the rear edge (4R) of the reinforcing ply generated by the cutting tool (10) extends parallel to the reinforcing threads (5) which delimit said dividing space (8).

4. Device according to any one of the preceding claims, **characterized in that** the cutting tool (10) is guided in rectilinear translation in a cutting direction (L10) which is at right angles to the longitudinal direction (L3) of the continuous strip (3).

5. Device according to any one of the preceding claims, **characterized in that** it comprises a conveyor (40) arranged to support a portion of the continuous strip (3) called "tip" (41, 42) which forms an acute angle lying between, on the one hand, the front edge (4F) of the continuous strip (3), intended to form the front edge (4F) of the reinforcing ply to be wound, and, on the other hand, the selvedge (3A) of said continuous strip (3) by which the action of the cutting tool (10) begins, and **in that** the synchronization unit (30) is arranged to control said conveyor (40) in such a way that said conveyor (40) supports and accompanies first of all a first tip (41) of the continuous strip (3), which corresponds to the front edge (4F) of a first reinforcing ply (4), to the drum (20), and lays said first tip (41) engaged on said drum (20), then said conveyor (40) then ensures, during the operation of winding of said first reinforcing ply (4) and during the cutting operation allowing said first reinforcing ply (4) to be detached from said continuous strip (3), a support and an accompaniment of said continuous strip (3) by engaging on said continuous strip (3) at the location of a future second tip (42), which corresponds to the tip of a second reinforcing ply which comes after the first reinforcing ply (4), and by accompanying the movement of the continuous strip (3) induced by the ongoing winding movement (M20) of the first reinforcing ply (4), and does so in order to stabilize said continuous strip (3) at the second tip (42) during the cutting operation which allows the first reinforcing ply (4) to be detached from said continuous strip (3).

6. Device according to any one of the preceding claims, **characterized in that** it comprises an optical detector allowing the synchronization unit (30) to define, with respect to a marker point associated with the continuous strip (3) which is currently winding on the drum (20), such as, for example, a marker point embodied by a paint mark produced on the continuous strip (3) or even a marker point corresponding to the front edge (4F) of the reinforcing ply when said front edge (4F) passes through a predetermined position, such as a given azimuthal position around the axis of rotation (Z20) of the drum, a starting position at which the cutting tool (10) engages the continuous strip (3) to generate the rear edge (4R) of said reinforcing ply.

7. Tyre building method, notably for pneumatic tyres, during which a continuous strip (3) is conveyed in a longitudinal direction (L3), a front edge (4F) of said continuous strip is engaged on a drum (20) and said drum is driven in rotation in a direction called "winding direction" (S20) so as to wind said continuous strip (3) over the circumference of said drum (20), by a movement called "winding movement" (M20), and during which said continuous strip (3) is cut using a cutting tool (10) that is moved across the entire width (W3) of said continuous strip, by a cutting movement (M10) which is oriented transversely to the longitudinal direction (L3) and which makes it possible to detach from the continuous strip a reinforcing ply (4) which extends, in the longitudinal direction, from the front edge (4F) of the continuous strip to a rear edge (4R) generated by the cutting movement (M10), said method being **characterized in that** the cutting movement (M10) is automatically synchronized with the winding movement (M20) so as to be able to detach, on the fly, the reinforcing ply (4) from the rest of the continuous strip (3), while said reinforcing ply (4) is engaged on the drum (20) and driven, with the continuous strip (3), by a nonzero speed of movement in the winding direction (S20).

FIG. 1A

FIG. 1B

FIG. 2A

FIG. 2B

FIG. 3A

FIG. 3B

FIG. 4A

FIG. 4B

FIG. 5A

FIG. 5B

FIG. 6

**RÉFÉRENCES CITÉES DANS LA DESCRIPTION**

**Documents brevets cités dans la description**

- WO 2018118008 A1
- EP 0561609 A1
- JP 2018024027 A